# EUROPEAN PATENT APPLICATION

(11) **EP 3 546 341 A1**
(43) Date of publication of application: **02.10.2019**
(21) Application number: 19166022.4
(22) Date of filing: 28.03.2019
(51) Int. Cl.: B64C 3/00, B64D 43/00, G01M 5/00, B64C 5/00, B64D 45/00

(54) **DEFLECTABLE AIRFOIL ASSEMBLY AND METHOD OF DETERMINING LOADING ON SAME**

(30) Priority: 29.03.2018 US 201862649813 P
(71) Applicant: Bombardier Inc., Dorval, Québec H4S 1Y9 (CA)
(72) Inventor: BENDAYAN, Menahem, Cote Saint-Luc, Québec H4W 1A7 (CA)
(74) Representative: Holmes, Matthew William

(57) **Abstract**

An airfoil assembly for an aircraft includes an airfoil body having an internal frame and a skin covering the internal frame to define a cavity of the airfoil body. The airfoil body defines a span between a root and a tip and is deflectable in a deflection direction transverse to the span upon experiencing aerodynamic loading. At least one shaft is attached to the airfoil body and disposed within the cavity adjacent to an inner surface of the skin. The shaft extends along at least part of the span. A shaft measuring device is mounted to the airfoil body within the cavity. The shaft measuring device operates to measure a parameter of the shaft caused by deflection of the airfoil body such that the parameter is indicative of the aerodynamic loading on the airfoil body. A method for determining aerodynamic loading on an airfoil body is also disclosed.

## Description

### TECHNICAL FIELD

The application relates generally to objects designed to aid in lifting or controlling an aircraft and, more particularly but not exclusively, to airfoil assemblies. This application claims priority from US Patent Application Serial No. 62/649, 813, filed 29^{th} March 2018, the entire contents of which are expressly incorporated herein by reference.

### BACKGROUND

Airfoil assemblies of aircraft experience loads during flight caused by aerodynamic forces. One such airfoil assembly, the wing, experiences wing loading during flight. Alleviating wing loading is desirable in aircraft controlled by fly-by-wire systems. However, in order to reduce wing loading, it must be possible to accurately determine wing loading in the first place.

Conventional systems for determining wing loading suffer from several drawbacks. Some conventional systems do not allow measuring wing loading during flight of the aircraft, and wing loading is instead determined during ground-based flight tests. Some conventional systems infer wing loading levels from accelerations, angles of attack, aircraft speed, and control surface measurements, rather than direct observation of wing movements. Inferring loads from the aircraft states is by nature imprecise, and therefore must be conservative. Some conventional systems rely on optical measurements of devices placed on the wing. These devices over time may become obstructed by impurities or dirt present in the environment, and the optical measurements during flight may be hampered by climatic phenomena such as snow and rain.

### SUMMARY

Aspects of the invention provide an airfoil assembly, a method and an aircraft as claimed in the appended claims. In an embodiment there is provided an airfoil assembly for an aircraft, comprising an airfoil body having an internal frame and a skin covering the internal frame to define a cavity of the airfoil body. The airfoil body may define a span between a root and a tip and may be deflectable in a deflection direction transverse to the span upon experiencing aerodynamic loading during flight of the aircraft. The assembly may comprise at least one shaft attached to the airfoil body and disposed within the cavity adjacent an inner surface of the skin. The at least one shaft may extend along at least part of the span. The assembly may comprise a shaft measuring device mounted to the airfoil body within the cavity. The shaft measuring device may be operable to measure a parameter of the at least one shaft caused by deflection of the airfoil body such that the parameter is indicative of the aerodynamic loading on the airfoil body.

In an embodiment, the at least one shaft is translatable along a direction of the span relative to the skin during deflection of the airfoil body, the shaft measuring device including a reference member disposed within the airfoil body, the parameter measurable by the shaft measuring device including a span-wise translation of a point on the at least one shaft in the direction of the span relative to the reference member.

In an embodiment, the shaft measuring device is operable to compare the span-wise translation to a reference value of the at least one shaft, the reference value being a distance of the point of the at least one shaft from the reference member upon there being no aerodynamic loading on the airfoil body.

In an embodiment, the shaft measuring device includes an optical sensor disposed on the airfoil body, and the at least one shaft includes a plurality of reflective members spaced apart along a length of the at least one shaft, the optical sensor operable to measure the span-wise translation of the at least one shaft relative to the reference member by counting a number of the reflective members.

In an embodiment, the skin has a first skin portion and a second skin portion spaced apart from each other across the cavity in the deflection direction transverse to the span, the at least one shaft includes a first shaft disposed within the cavity adjacent the first skin portion and a second shaft disposed within the cavity adjacent the second skin portion, the first and second shafts being translatable along a direction of the span relative to the first and second skin portions, respectively, during deflection of the airfoil body, the shaft measuring device including a rotatable member rotatably mounted to the internal frame within the cavity to define an axis of rotation of the rotatable member, the rotatable member extending between and connecting the first and second shafts, the parameter measurable by the shaft measuring device including an angular displacement of the rotatable member about the axis of rotation caused by translation of the first and second shafts along the direction of the span.

In an embodiment, the skin has a first skin portion and a second skin portion spaced apart from each other across the cavity in the deflection direction transverse to the span, the at least one shaft includes a first shaft disposed within the cavity adjacent the first skin portion and a second shaft disposed within the cavity adjacent the second skin portion, the first and second shafts being fixed in place relative to the first and second skin portions, respectively, the shaft measuring device including a strain gauge and the parameter measurable by the shaft measuring device including a strain on one of the first and second shafts caused by deflection of the airfoil body.

In an embodiment, the strain on the first and second shaft shafts is zero at no aerodynamic loading on the airfoil body.

In an embodiment, the airfoil body includes a mid-span portion defined halfway between the tip and the root, the at least one shaft extending only between the tip and the mid-span portion.

In an embodiment, the at least one shaft includes a plurality of span-wise segments arranged end-to-end, each span-wise segment disposed within the cavity adjacent the inner surface of the skin and occupying a separate segment of the span.

In an embodiment, the internal frame includes a front spar and an aft spar, and the skin has a leading edge portion covering the front spar and a trailing edge portion covering the aft spar, the at least one shaft attached to one of the front and rear spars to extend adjacent to at least part of the leading or trailing edge portions.

In an embodiment, the airfoil assembly is one of a wing, a horizontal stabilizer, and a vertical stabilizer.

In an embodiment, there is provided an aircraft having an airfoil assembly according to one or more of the above-mentioned embodiments.

In another aspect, there is provided a method for determining aerodynamic loading on an airfoil body during flight of an aircraft, the method comprising measuring a parameter of at least one shaft disposed inside the airfoil body, the at least one shaft extending adjacent an inner surface of a skin of the airfoil body and the parameter being indicative of deflection of the airfoil body caused by the aerodynamic loading; and providing the aerodynamic loading on the airfoil body based on the parameter of the at least one shaft.

In an embodiment, measuring the parameter includes measuring a translation of the at least one shaft relative to the skin of the airfoil body in a direction of a span of the aircraft body.

In an embodiment, providing the aerodynamic loading includes comparing the translation of the at least one shaft to a reference value of the at least one shaft, the reference value being indicative of no aerodynamic loading on the airfoil body.

In an embodiment, the at least one shaft includes a first shaft disposed adjacent a first portion of the skin of the airfoil body and a second shaft adjacent a second portion of the skin spaced apart from the first portion, and measuring the parameter includes measuring an angular displacement of an extendable rotatable member interconnecting the first and second shafts and pivoting about an axis of rotation upon translation of the first and second shafts in the direction of the span.

In an embodiment, the at least one shaft includes a first shaft disposed adjacent a first portion of the skin of the airfoil body and a second shaft adjacent a second portion of the skin spaced apart from the first portion, and wherein measuring the parameter includes measuring a strain on one of the first and second shafts.

In an embodiment, measuring the parameter includes measuring the parameter of the at least one shaft only between a tip of the airfoil body and a middle of a span of the airfoil body.

In an embodiment, measuring the parameter of the at least one shaft includes measuring the parameter at a plurality of positions on the at least one shaft, each of the positions being spaced apart along a span of the airfoil body.

In an embodiment, providing the aerodynamic loading includes correlating the parameter of the at least one shaft with a reference value of deflection of the aircraft body, the reference value being determined when the aircraft is grounded.

In an embodiment, the method further comprises commanding flight control surfaces of the aircraft based on the aerodynamic loading on the airfoil body.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### DESCRIPTION OF THE DRAWINGS

Embodiments of the invention will now be described, by way of example only, with reference to the accompanying figures in which:
Fig. 1 is a schematic tridimensional view of an aircraft;
Fig. 2A is a schematic side elevational view of a cross-section of a wing of the aircraft of Fig. 1;
Fig. 2B is a top view of the wing of Fig. 2A showing internal components of the wing;
Fig. 3A is a schematic cross-sectional view of a portion of the wing circled in Fig. 2A, showing a first position of a shaft of the wing in accordance with an embodiment of the present disclosure;
Fig. 3B is a schematic cross-sectional view of the same portion of the wing shown in Fig. 3A, showing a second position of the shaft;
Fig. 3C is a schematic cross-sectional view of the same portion of the wing shown in Fig. 3A, showing a third position of the shaft;
Fig. 4 is a schematic cross-sectional view of the portion of the wing circled in Fig. 2A, showing an optical sensor of a shaft measuring device of the wing, in accordance with another embodiment of the present disclosure;
Fig. 5A is a schematic cross-sectional view of a portion of the wing circled in Fig. 2A, showing a first position of first and second shafts of the wing, in accordance with yet another embodiment of the present disclosure;
Fig. 5B is a schematic cross-sectional view of the same portion of the wing shown in Fig. 5A, showing a second position of the first and second shafts;
Fig. 6 is a schematic cross-sectional view of the portion of the wing circled in Fig. 2A, showing a strain gauge of a shaft measuring device of the wing, in accordance with yet another embodiment of the present disclosure; and
Fig. 7 is a top view of a wing of the aircraft of Fig. 1, showing internal components of the wing such as a shaft in accordance with yet another embodiment of the present disclosure.

### DETAILED DESCRIPTION

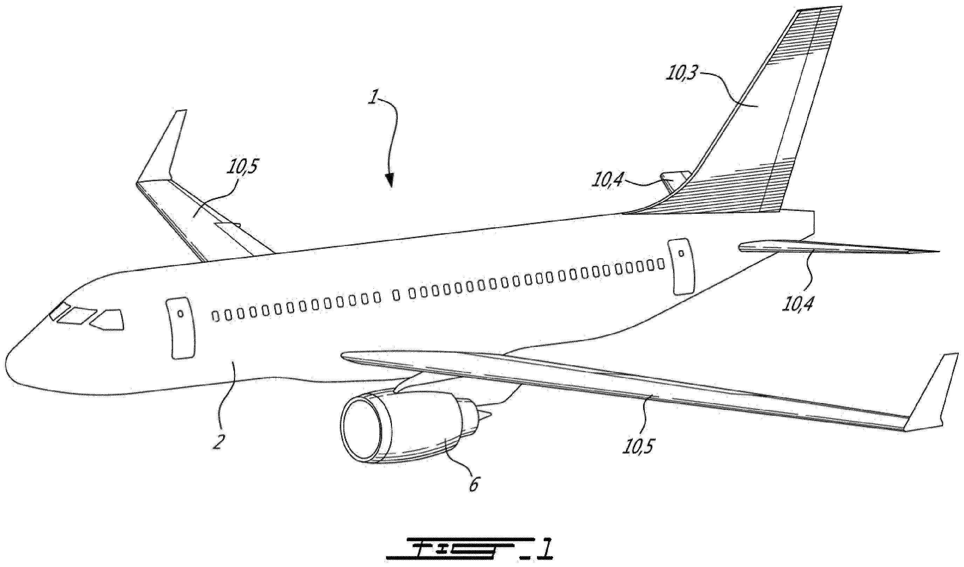

Referring to the drawings and more particularly to Fig. 1, an aircraft is shown at 1 and is generally described to illustrate some components for reference purposes in the present disclosure. The aircraft 1 has a fuselage 2 having a fore end at which a cockpit is located, and an aft end supporting a tail assembly, with the cabin generally located between the cockpit and the tail assembly. The tail assembly has a fuselage-mounted tail, but other configurations may also be used for the aircraft 1, such as cruciform, T-tail, etc. The aircraft 1 has multiple airfoil assemblies 10. Each airfoil assembly 10 is an object or collection of objects which defines one or more surfaces designed to aid in lifting or controlling the aircraft 1 by making use of the air currents through which the aircraft 1 moves. The tail assembly includes some of the airfoil assemblies 10, namely, a vertical stabilizer 3 with a rudder, and horizontal stabilizers 4 with elevators. Each of the wings 5 is also an airfoil assembly 10. The wings 5 project laterally from the fuselage 2. The aircraft 1 has engines 6 supported by the wings 5, although the engines 6 could also be mounted to the fuselage 2. The aircraft 1 is shown as a jet-engine aircraft, but may also be a propeller aircraft. It is also understood that although Fig. 1 shows a commercial aircraft, the aircraft 1 may alternately be any other type of aircraft, including, but not limited to, a business aircraft or a private aircraft.

For the sake of expediency, the features of the airfoil assembly 10 are described herein with reference to the wings 5. However, it will be appreciated that the features of the airfoil assembly 10 described herein with reference to the wings 5 are also associated with, or adaptable to, *mutatis mutandis*, the other airfoil assemblies 10 of the aircraft 1, such as the vertical stabilizer 3 and the horizontal stabilizers 4.

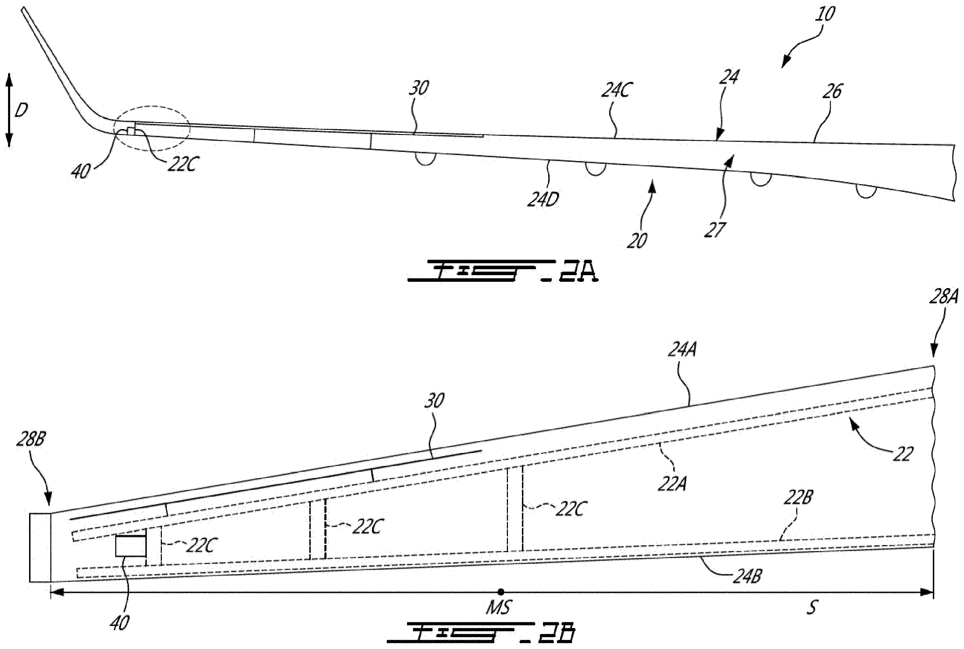

Referring to Figs. 2A and 2B, the airfoil assembly 10 has an airfoil body 20 which forms the corpus of the airfoil assembly 10 and provides structure thereto. The airfoil body 20 has an internal frame 22. The internal frame 22 includes any suitable interconnection of components to provide structure to the airfoil body 20 so that it can support the loads acting thereon during flight of the aircraft 1. In the depicted embodiment where the airfoil assembly 10 is one of the wings 5, the internal frame 22 includes any suitable arrangement of spars, ribs, stringers, and other members. More particularly, and as better shown in Fig. 2B, the internal frame 22 includes a front spar 22A and a rear or aft spar 22B, which are interconnected by multiple transverse ribs 22C. The airfoil body 20 has a span S, which forms part of the wing span of the aircraft 1 in the depicted embodiment. The span S is defined between a root 28A of the airfoil body 20 and a tip 28B of the airfoil body 20. A middle of the span or mid-span MS is defined at the halfway point along the span S between the root 28A and the tip 28B.

The airfoil body 20 also includes a skin 24 which covers the internal frame 22 and provides an aerodynamic outer surface 26 which in the depicted embodiment, helps the wing 5 to generate lift. In the embodiment where the airfoil assembly 10 is the horizontal stabilizer 4, the outer surface 26 of the skin 24 may assist with directional control (e.g. pitch) of the aircraft 1. In the embodiment where the airfoil assembly 10 is the vertical stabilizer 3, the outer surface 26 of the skin 24 may also assist with directional control (e.g. yaw) of the aircraft 1. A cross-section of the skin 24 taken in a plane transverse to the span S shows the profile of the airfoil defined by the airfoil body 20. A leading edge portion 24A of the skin 24 covers the front spar 22A, and a trailing edge portion 24B of the skin 24 covers the aft spar 22B. The wing 5 has a first or upper skin portion 24C defining an uppermost outer surface of the skin 24 and a second or lower skin portion 24D defining a lowermost outer surface of the skin 24. The skin 24 is any suitable metal or composite material, and is closed on itself such that it defines the cavity 27 and a housing for the internal frame 22.

As the aircraft 1 moves through the air during flight, the airfoil body 20 is subjected to aerodynamic forces which causes aerodynamic loading on the outer surface 26 of the skin 24. If the aerodynamic loading is large enough, it will cause the airfoil body 20 to deflect in a deflection direction D that is transverse to the span S. In the depicted embodiment where the airfoil assembly 10 is one of the wings 5, this aerodynamic wing loading causes the wing 5 or parts thereof to deflect upward and downward during flight. Similarly, in the embodiment where the airfoil assembly 10 is one of the horizontal stabilizers 4, this aerodynamic loading causes the horizontal stabiliser 4 or parts thereof to also deflect upward and downward during flight. In the embodiment where the airfoil assembly 10 is the vertical stabilizer 3, this aerodynamic loading causes the vertical stabilizer 3 or parts thereof to deflect in a direction transverse to its span during some flight manoeuvres.

The airfoil assembly 10 disclosed herein includes features which help to determine the deflection of the airfoil body 20 and/or the aerodynamic loading thereon. More particularly, the airfoil assembly 10 includes one or more shafts 30 mounted to the airfoil body 20 which experience the deflection of the airfoil body 20, and a shaft measuring device 40 which measures a parameter of the shaft 30 when subjected to the deflection of the airfoil body 20. Both of these features are described in greater detail below.

Figs. 2A and 2B show a single shaft 30 attached to the airfoil body 20. The shaft 30 is disposed in the cavity 27 inside the airfoil body 20. The shaft 30 is an elongated body, and extends adjacent to a length of the inner surface of the skin 24 over some or all of the span S of the airfoil body 20. The shaft 30 extends along the upper skin portion 24C as shown in Fig. 2A and is spaced closely to the upper skin portion 24C, but it may extend along the lower skin portion 24D in addition or instead. In an embodiment, the shaft 30 abuts directly against the upper or lower skin portions 24C, 24D. Referring to Fig. 2B, the shaft 30 is attached to the front spar 22A and extends adjacent to the inner surface of the leading edge portion 24A of the skin 24. The shaft 30 is therefore not present along the middle section of the wing 5 where fuel tanks may be present. In an alternate embodiment, the shaft 30 is attached to the aft spar 22B and extends adjacent to the inner surface of the trailing edge portion 24B of the skin 24.

In the embodiment shown, the shaft 30 extends over only part of the span S, and more particularly, along the portion of the span S between the mid-span MS and the tip 28B of the airfoil body 20. In this configuration, the shaft 30 is present on the portion of the wing 5 that will experience the most deflection, it being generally understood that it is less important to determine the wing deflection and wing loading at locations on the wing 5 closer to the root 28A. In an alternate embodiment, the shaft 30 extends the entire span S of the airfoil body 20, and is anchored at both the root 28A and the tip 28B. The shaft 30 is any suitable long and narrow body that can experience the deflection of the airfoil body 20 without experiencing elastic deformation. The shaft 30 is made of metal. The shaft 30 may therefore be any suitable rod, bar, pole, stick, or other such object capable of such functionality. By being positioned within the cavity 27 and adjacent to the inner surface of the skin 24, the shaft 30 is relatively easy to inspect and maintain, and is robust because it is shielded by the skin 24.

The shaft measuring device 40 functions to measure a parameter of the shaft 30 when it experiences the deflection of the airfoil body 20. As will be explained in greater detail below, the value and nature of the parameter measured by the shaft measuring device 40 may vary depending on how the shaft 30 is attached to the airfoil body 20. Whatever its nature, the parameter is indicative of the aerodynamic loading on the airfoil body 20. By "indicative of the aerodynamic loading", it is understood that the information about the shaft 30 provided by the parameter allows the aerodynamic loading on the airfoil body 20 to be determined, as will be made clearer in the examples provided below. The parameter is therefore a value associated with the shaft 30 which can be readily converted into information about aerodynamic loading on the airfoil body 20. By directly measuring a property of the shaft 30 experiencing deflection, the shaft measuring device 40 may allow for a more accurate determination of aerodynamic loading on the airfoil body 20. Furthermore, the shaft measuring device 40 helps to generate real-time information on aerodynamic loading during flight as the shaft 30 responds to the deflection of the airfoil body 20. Accurate and timely information on the aerodynamic loading on the airfoil body 20 will allow the appropriate control surfaces (e.g. flaps, ailerons, rudders, spoilers, etc.) to be deployed as required to alleviate or adapt to the aerodynamic loading. This is in contrast to some conventional systems, which infer loading from flight parameters rather than from direct observation of movements, and are therefore less accurate and more conservative.

The response of the shaft 30 to the deflection of the airfoil body 20, as well as the configuration of the shaft measuring device 40, may vary, as described in greater detail below.

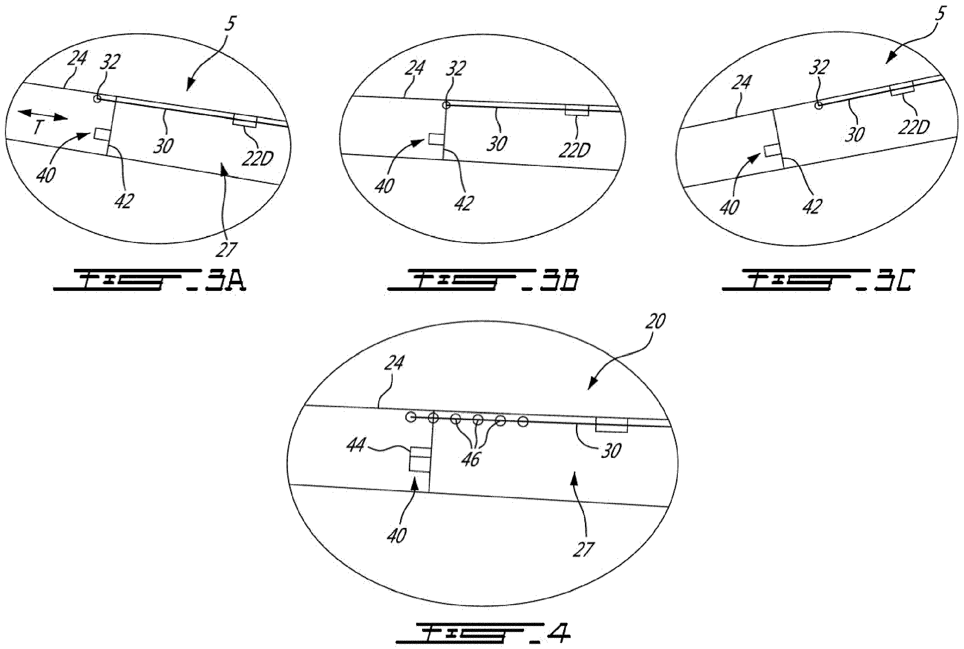

In the embodiment shown in Figs. 3A to 3C, the shaft 30 responds to the deflection of the airfoil body 20 by displacing relative to the skin 24. The shaft 30 is mounted to the airfoil body 20 so that it can translate in a direction T that is substantially parallel to the span S during deflection of the airfoil body 20. The mounting of the shaft 30 to the airfoil body 20 can take different configurations to achieve such functionality. For example, in the depicted embodiment, the internal frame 22 includes a sleeve 22D mounted about the shaft 30, which allows the shaft 30 to translate therethrough.

In the depicted embodiment, the shaft measuring device 40 includes a reference member 42 disposed in the cavity 27 of the airfoil body 20. The reference member 42 is an object against which translation of the shaft 30 is assessed. The reference member 42 may therefore be any suitable object capable of serving such a function. For example, in the depicted embodiment, the reference member 42 is a rib of the internal frame 22. In an alternate embodiment, the reference member 42 is a point on the inner surface of the skin 24. In yet another alternate embodiment, the reference member 42 is a location on one of the spars of the internal frame 22. The parameter of the shaft 30 measured by the shaft measuring device 40 in the depicted embodiment is the span-wise translation of a measurement point 32 on the shaft 30 in the direction T relative to the reference member 42. The parameter measured by the shaft measuring device 40 is therefore a distance, provide in units of length (mm, inches, cm, etc.), of the movement of the measurement point 32 of the shaft 30 when the airfoil body 20 undergoes deflection. Based on correlations made during ground testing, the translation of the measurement point 32 can be related to the deflection of the airfoil body 20, which in turn can be related to the aerodynamic loading on the airfoil body 20. Therefore, in the depicted embodiment, the measurement of the relative displacement of the shaft 30 can provide meaningful information about deflection of the wing 5 and aerodynamic loading thereon.

Fig. 3B shows the position of the measurement point 32 when there is no aerodynamic loading on the wing 5, and thus no deflection of the wing 5. The position of the shaft 30 in Fig. 3B is its neutral position. The shaft measuring device 40 measures the distance of the measurement point 32 to the reference member 42, and records it as a reference value of the shaft 30. The reference value is indicative of no aerodynamic loading acting against the wing 5. In Fig. 3A, the wing 5 is shown deflected upwardly, which causes the measurement point 32 to translate relative to the skin 24 and towards the tip 28B of the wing 5, when compared to its position in Fig. 3B. The shaft measuring device 40 is operable to compare the span-wise translation of the measurement point 32 to its reference value, and thereby determine the aerodynamic loading which contributed to the upward deflection of the wing 5. Similarly, in Fig. 3C, the wing 5 is shown deflected downwardly, which causes the measurement point 32 to translate relative to the skin 24 and towards the root 28A of the wing 5, when compared to its position in Fig. 3B. The shaft measuring device 40 is operable to compare the span-wise translation of the measurement point 32B to its reference value, and thereby determine the aerodynamic loading which contributed to the downward deflection of the wing 5.

The shaft measuring device 40 may include any suitable device to measure the span-wise translation parameter of the shaft 30. One possible device is a laser which tracks translation of the measurement point 32 and coverts this movement into units of length. Another possible device is a camera which records translation of the measurement point 32 and coverts this movement into units of length.

Yet another possible device is shown in Fig. 4. The shaft measuring device 40 includes an optical sensor 44 that is disposed in the cavity 27 of the airfoil body 20, and multiple reflective members 46 on the shaft 30. The reflective members 46 are spaced apart along the length of the shaft 30. When the wing 5 experiences deflection and the shaft 30 is displaced, the optical sensor 44 counts the number of reflective members 46 which have translated towards the root 28A or the tip 28B, and determines the deflection of the wing 5 therefrom. The correlation between the number of reflective members 46 being translated and counted and the deflection of the wing 5 can be established on the ground. The optical sensor 44 and reflective members 46 are housed within the airfoil body 20 and protected from the elements by the skin 24. The performance of the optical sensor 44 is therefore less likely to be adversely affected by climatic phenomena such as snow and rain. In the depicted embodiment, the optical sensor 44 includes a light-emitting diode (LED) that illuminates the reflective members 46 and records the reflection of the light therefrom. Other configurations are also possible.

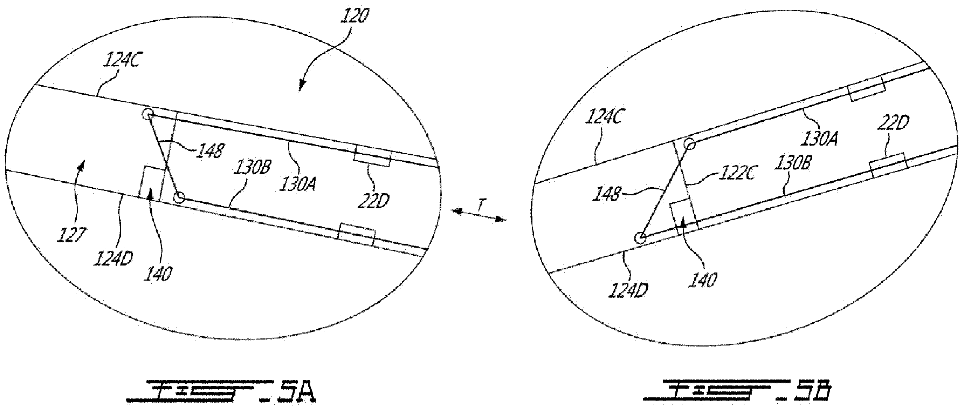

In the embodiment shown in Figs. 5A and 5B, a first shaft 130A and a second shaft 130B are provided. The first shaft 130A is disposed in the cavity 127 of the airfoil body 120 adjacent to the first skin portion 124C, and the second shaft 130B is disposed within the cavity 127 adjacent to the second skin portion 124D. The first and second shafts 130A, 130B respond to the deflection of the airfoil body 120 by displacing relative to the first and second skin portions 124C, 124D, respectively, along the translation direction T.

In the depicted embodiment, the shaft measuring device 140 includes a rotatable member 148 rotatably mounted to the internal frame 122 within the cavity 127. In the depicted embodiment where the airfoil assembly 110 is a wing 5, the rotatable member 148 has an upright orientation and is rotatably mounted to one of the ribs 122C of the internal frame 122. The rotatable member 148 is rotatable about an axis defined by its mounting to the rib 122C. The rotatable member 148 extends between, and is connected to, the first and second shafts 130A, 130B. When the first and second shafts 130A, 130B undergo translation in the direction T, they cause rotation of the rotatable member 148 about the axis. In the depicted embodiment, the parameter measured by the shaft measuring device 140 is an angular displacement of the rotatable member 148 about the axis caused by the translation of the first and second shafts 130A, 130B. In the depicted embodiment, the rotatable member 148 is telescopic or otherwise freely adjustable in length so that it can increase in length along its axis to accommodate the translation of the first and second shafts 130A, 130B and not hinder their translation.

This is better appreciated by comparing Figs. 5A and 5B. When the wing 5 deflects upwardly, as shown in Fig. 5A, the lower second shaft 130B will translate relative to the second skin portion 124D toward the root 128A, and the upper first shaft 130A will translate relative to the first skin portion 124C toward the tip 128B. This relative movement of the first and second shafts 130A, 130B causes the rotatable member 148 to rotate about the axis. The shaft measuring device 140 is operable to measure the angular displacement of the rotatable member 148, and thereby determine the aerodynamic loading which contributed to the upward deflection of the wing 5. Similarly, when the wing 5 deflects downwardly, as shown in Fig. 5B, the lower second shaft 130B will translate relative to the second skin portion 124D toward the tip 128B, and the upper first shaft 130A will translate relative to the first skin portion 124C toward the root 128A. This relative movement of the first and second shafts 130A, 130B causes the rotatable member 148 to rotate about the axis. The shaft measuring device 140 is operable to measure the angular displacement of the rotatable member 148, and thereby determine the aerodynamic loading which contributed to the downward deflection of the wing 5.

The angular displacement of the rotatable member 148 may be measured by the shaft measuring device 140 using any suitable technique. One possible technique involves recording the angular orientation of the rotatable member 148 with the shaft measuring device 140 at a neutral position corresponding to no aerodynamic loading on the wing 5, and to then compare the angular orientation of the rotatable member 148 at a condition of aerodynamic loading to determine the angular displacement of the rotatable member 148.

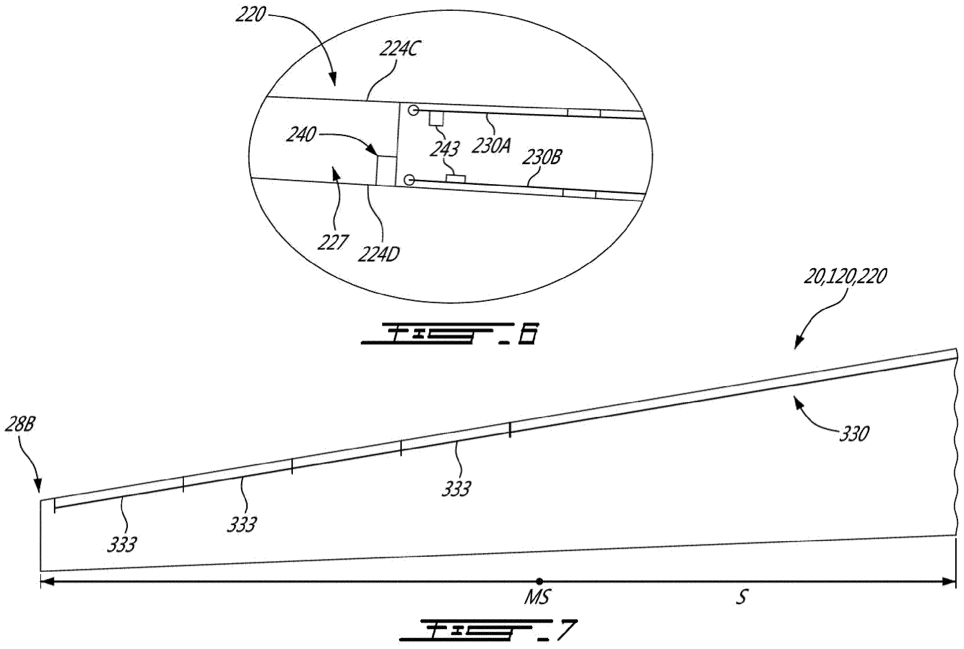

In the embodiment shown in Fig. 6, the first and second shafts 230A, 230B respond to the deflection of the airfoil body 220 by experiencing strain. The first shaft 230A is disposed in the cavity 227 of the airfoil body 220 adjacent to the first skin portion 224C, and the second shaft 230B is disposed within the cavity 227 adjacent to the second skin portion 224D. The first and second shafts 230A, 230B are mounted to the airfoil body 220 to remain fixed in place therewith. The first and second shafts 230A, 230B therefore do not experience displacement relative to the first and second skin portions 224C, 224D, respectively, when subjected to the deflection of the airfoil body 220. In one possible embodiment, opposite ends of the first and second shafts 230A, 230B are attached to structures of the wing 5.

In the depicted embodiment, the shaft measuring device 240 includes a strain gauge 243 mounted onto each of the first and second shafts 230A, 230B. The parameter measurable by the strain gauge 243 is a strain on the respective shafts 230A, 230B caused by deflection of the airfoil body 220. The strain parameter of the first or second shaft 230A, 230B measured by the shaft measuring device 240 helps to determine aerodynamic loading on the wing 5. The strain parameter of the first and second shafts 230A, 230B may be directly correlated to the aerodynamic load acting on the wing 5, or may be correlated to the deflection of the wing 5.

The presence of both the first and a second shafts 230A, 230B helps to capture the strain parameter regardless of whether the wing 5 is deflecting upwardly or downwardly. Since the first and second shafts 230A, 230B do not experience displacement relative to the first and second skin portions 224C, 224D, respectively, one of the shafts 230A, 230B will experience tension during deflection of the wing 5 while the other shaft 230A, 230B will experience buckling. For example, during upward deflection of the wing 5, the second shaft 230B will experience tension while the first shaft 230A will experience buckling. The strain parameter provided by the buckling first shaft 230A may not be helpful in determining deflection of the wing 5, whereas the strain parameter of the second shaft 230B which experiences tension may be helpful.

In the depicted embodiment, the first and second shafts 230A, 230B are calibrated to be free of tension and strain when there is no aerodynamic loading on the wing 5. Therefore, strain parameter values measured by the strain gauges 243 that have a magnitude greater than zero are indicative of aerodynamic loading on the wing 5. In an alternate embodiment, one or both of the first and second shafts 230A, 230B are pre-loaded or pre-tensioned with a known strain value when there is no aerodynamic loading on the wing 5.

Fig. 7 shows another embodiment of the shaft 330. The shaft 330 includes multiple segments 333. The segments 333 are arranged in series, and extend end-to-end in the depicted embodiment along the portion of the span S occupied by the shaft 330. Each segment 333 is located in the cavity 27, 127, 227 of the aircraft body 20, 120, 220 adjacent to the inner surface of the skin 24, and occupies a separate segment of the span S. The shaft measuring device 40, 140, 240 is operable to measure the parameter on each one of the segments 333. The segments 333 therefore contribute to measuring the parameter at multiple points along the span S of the airfoil body 20, 120, 220 in order to determine aerodynamic loading at various points of interest along the span S, such as at the tip 28B and mid-span MS. In the depicted embodiment, each segment 333 is a section of an integral shaft 330. In an alternate embodiment, each segment 333 is a unique body that is attached to other segments 333 to form the shaft 330. In yet another embodiment, each segment 333 has one or more of the rotatable members 148, such that the shaft 330 is a single body with multiple rotatable members 148.

Referring to Figs. 2A and 2B, there is also disclosed a method for determining the aerodynamic loading on the airfoil body 20. The method includes measuring a parameter of the shaft 30, which is responsive to deflection of the airfoil body 20 caused by the aerodynamic loading. The method includes providing the aerodynamic loading based on the parameter of the shaft 30. The aerodynamic loading may be provided to a fly-by-wire computer, which may command flight control surfaces such as flaps, ailerons, rudders, and spoilers of the aircraft 1 based on the aerodynamic loading on the airfoil body 20 to alleviate the aerodynamic loading.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure, and such modifications are intended to fall within the appended claims.

## Claims

1. An airfoil assembly for an aircraft, comprising:
an airfoil body having an internal frame and a skin covering the internal frame to define a cavity of the airfoil body, the airfoil body defining a span between a root and a tip and being deflectable in a deflection direction transverse to the span upon experiencing aerodynamic loading during flight of the aircraft;
at least one shaft attached to the airfoil body and disposed within the cavity adjacent an inner surface of the skin, the at least one shaft extending along at least part of the span; and
a shaft measuring device mounted to the airfoil body within the cavity, the shaft measuring device operable to measure a parameter of the at least one shaft caused by deflection of the airfoil body such that the parameter is indicative of the aerodynamic loading on the airfoil body.

2. The airfoil assembly as claimed in claim 1, wherein the at least one shaft is translatable along a direction of the span relative to the skin during deflection of the airfoil body, the shaft measuring device including a reference member disposed within the airfoil body, the parameter measurable by the shaft measuring device including a span-wise translation of a point on the at least one shaft in the direction of the span relative to the reference member.

3. The airfoil assembly as claimed in claim 2, wherein the shaft measuring device is operable to compare the span-wise translation to a reference value of the at least one shaft, the reference value being a distance of the point of the at least one shaft from the reference member upon there being no aerodynamic loading on the airfoil body.

4. The airfoil assembly as claimed in claim 2 or claim 3, wherein the shaft measuring device includes an optical sensor disposed on the airfoil body, and the at least one shaft includes a plurality of reflective members spaced apart along a length of the at least one shaft, the optical sensor operable to measure the span-wise translation of the at least one shaft relative to the reference member by counting a number of the reflective members.

5. The airfoil assembly as claimed in any preceding claim, wherein the skin has a first skin portion and a second skin portion spaced apart from each other across the cavity in the deflection direction transverse to the span, the at least one shaft includes a first shaft disposed within the cavity adjacent the first skin portion and a second shaft disposed within the cavity adjacent the second skin portion, the first and second shafts being translatable along a direction of the span relative to the first and second skin portions, respectively, during deflection of the airfoil body, the shaft measuring device including a rotatable member rotatably mounted to the internal frame within the cavity to define an axis of rotation of the rotatable member, the rotatable member extending between and connecting the first and second shafts, the parameter measurable by the shaft measuring device including an angular displacement of the rotatable member about the axis of rotation caused by translation of the first and second shafts along the direction of the span.

6. The airfoil assembly as claimed in any preceding claim, wherein the skin has a first skin portion and a second skin portion spaced apart from each other across the cavity in the deflection direction transverse to the span, the at least one shaft includes a first shaft disposed within the cavity adjacent the first skin portion and a second shaft disposed within the cavity adjacent the second skin portion, the first and second shafts being fixed in place relative to the first and second skin portions, respectively, the shaft measuring device including a strain gauge and the parameter measurable by the shaft measuring device including a strain on one of the first and second shafts caused by deflection of the airfoil body.

7. The airfoil assembly as claimed in claim 6, wherein the strain on the first and second shaft shafts is zero at no aerodynamic loading on the airfoil body.

8. The airfoil assembly as claimed in any preceding claim, wherein the airfoil body includes a mid-span portion defined halfway between the tip and the root, the at least one shaft extending only between the tip and the mid-span portion.

9. The airfoil assembly as claimed in any preceding claim, wherein the at least one shaft includes a plurality of span-wise segments arranged end-to-end, each span-wise segment disposed within the cavity adjacent the inner surface of the skin and occupying a separate segment of the span.

10. The airfoil assembly as claimed in any preceding claim, wherein the internal frame includes a front spar and an aft spar, and the skin has a leading edge portion covering the front spar and a trailing edge portion covering the aft spar, the at least one shaft attached to one of the front and rear spars to extend adjacent to at least part of the leading or trailing edge portions.

11. The airfoil assembly as claimed in any preceding claim being one of a wing, a horizontal stabilizer, and a vertical stabilizer.

12. A method for determining aerodynamic loading on an airfoil body during flight of an aircraft, the method comprising:
measuring a parameter of at least one shaft disposed inside the airfoil body, the at least one shaft extending adjacent an inner surface of a skin of the airfoil body and the parameter being indicative of deflection of the airfoil body caused by the aerodynamic loading; and
providing the aerodynamic loading on the airfoil body based on the parameter of the at least one shaft.

13. The method as claimed in claim 12, wherein measuring the parameter includes measuring a translation of the at least one shaft relative to the skin of the airfoil body in a direction of a span of the aircraft body.

14. The method as claimed in claim 13, wherein providing the aerodynamic loading includes comparing the translation of the at least one shaft to a reference value of the at least one shaft, the reference value being indicative of no aerodynamic loading on the airfoil body.

15. The method as claimed in claim 13 or claim 14, wherein the at least one shaft includes a first shaft disposed adjacent a first portion of the skin of the airfoil body and a second shaft adjacent a second portion of the skin spaced apart from the first portion, and measuring the parameter includes measuring an angular displacement of an extendable rotatable member interconnecting the first and second shafts and pivoting about an axis of rotation upon translation of the first and second shafts in the direction of the span.
